Europäisches Patentamt

European Patent Office

Office européen des brevets

(19)

(11) EP 0 432 025 B1

(12) FASCICULE DE BREVET EUROPEEN

(45) Date de publication et mention
de la délivrance du brevet:
**31.01.1996 Bulletin 1996/05**

(51) Int Cl.⁶: **H04B 10/10**

(21) Numéro de dépôt: **90403413.9**

(22) Date de dépôt: **30.11.1990**

(54) **Système optique de transmission de messages**

Optisches Nachrichtenübertragungssystem

Optical system for message transmission

(84) Etats contractants désignés:
**DE ES GB IT**

(30) Priorité: **01.12.1989 FR 8915859**

(43) Date de publication de la demande:
**12.06.1991 Bulletin 1991/24**

(73) Titulaire:
**SAT (SOCIETE ANONYME DE
TELECOMMUNICATIONS) Société Anonyme
française
F-75631 Paris Cédex 13 (FR)**

(72) Inventeurs:
- **Bertrand, Michel Paul
  94120 Fontenay-Sous-Bois (FR)**
- **Bucher, Michel Benoît Joseph
  75014 Paris (FR)**
- **Castanet, Yves René
  92260 Fontenay-Aux-Roses (FR)**

(74) Mandataire: **Bloch, Gérard et al
F-75116 Paris (FR)**

(56) Documents cités:
EP-A- 0 324 484          FR-A- 2 313 716
FR-A- 2 352 452

Printed by Jouve, 75001 PARIS (FR)

## Description

La présente invention se rapporte aux systèmes de transmission à courte portée d'informations émises par au moins un équipement émetteur vers un ou plusieurs équipements récepteurs, l'équipement émetteur étant situé dans un champ semi-hémisphérique au-dessus des récepteurs.

La présente invention se rapporte tout particulièrement à la transmission d'informations confidentielles dans les meilleures conditions de couverture de discrétion et de redondance. En effet, ces conditions idéales de transmission sont parfois difficiles à obtenir lorsque, dans un tel champ semi-hémisphérique, se trouvent des sources parasites. Ces sources parasites peuvent être très variées. Un fond très brillant ou le soleil induisent un bruit au niveau des équipements récepteurs, néfaste à de bonnes qualité et sécurité dans la réception du message.

Le système de transmission de l'invention s'applique en particulier aux liaisons entre un porte-avion et un ou plusieurs avions sur le pont d'envol ou encore à des échanges de messages entre avions en patrouille, l'un des avions portant alors la source coopérative émettant le message utile, les autres avions disposant des systèmes de réception.

Un système de transmission unilatérale, comprenant un émetteur optique à faisceau modulable placé sur l'équipement émetteur, des moyens pour moduler ledit faisceau à partir desdites informations, un détecteur optique placé sur chaque équipement récepteur et des moyens pour démoduler le signal de sortie dudit récepteur, est déjà connu. Ainsi, le brevet FR-A-2 352 452 décrit un système de ce type. Il préconisait l'utilisation d'un rayonnement incohérent afin de garantir une discrétion quasi absolue puisque la loi de détection est alors en $I/d^2$, d étant la distance de l'équipement récepteur à l'émetteur; il préconisait encore d'illuminer un point du champ par deux ou plusieurs émetteurs.

Ce dernier système s'appliquait en particulier aux liaisons entre un porte-avion et un avion situé sur le pont d'envol de ce porte-avion afin d'assurer la transmission d'un message d'alignement. Ce système utilisait une porteuse optique non cohérente dans l'infrarouge proche, de l'ordre de 0,9 µm de longueur d'onde. La source d'émission proprement dite était un ensemble de diodes électroluminescentes de type Ga As montées en série et modulées en tout ou rien. Le système optique d'émission étant chargé de former, à partir du faisceau émis par les diodes, un faisceau de ± 1 degré en site et de 45 degrés ou 90 degrés en gisement. L'ensemble du faisceau était légèrement incliné vers le bas et se trouvait à la hauteur des dérives des avions. La couverture du pont d'envol du porte-avion était réalisée grâce à une combinaison de plusieurs émetteurs orientés les uns par rapport aux autres de manière judicieuse. Le récepteur était composé d'une tête optique située sur la dérive de l'avion et constitué de six photodiodes au silicium collées sur un support hexagonal de manière à assurer, dans le plan perpendiculaire à l'axe dudit support, un diagramme de réception pratiquement omnidirectionnel. Une mince couche en CdTe, par exemple placée sur les photodiodes, permettait l'élimination, à la réception, d'une majeure partie du spectre solaire. Un traitement antireflet favorisait la réception par les photodiodes des signaux à 0,93 µm. L'ensemble du dispositif de réception était en outre protégé par une fenêtre cylindrique en quartz. Un système de "persiennes" horizontales associé aux photodiodes permettait :

- d'interdire l'éclairement des photodiodes par le soleil lorsque le site de ce dernier excédait ± 7,5 degrés,

- de limiter leur éclairement par le paysage environnant. Enfin, les sorties des photodiodes étaient mises en parallèles, côté récepteur, à travers un câble coaxial à l'entrée d'un préamplificateur. L'ensemble de la tête optique du récepteur, appelé bougie, était sensiblement un cylindre sortant de la dérive de l'avion sur une hauteur de 8,7 cm et de diamètre de 4,7 cm.

Ce système connu apportait déjà une bonne confidentialité. Toutefois, il présente aujourd'hui de multiples inconvénients. Un premier inconvénient tient à l'ensemble de réception ou "bougie" qui constitue une contrainte du point de vue aérodynamique, tout particulièrement pour les avions supersoniques. En effet, cet ensemble de réception est un cylindre sortant de la dérive de l'avion.

En outre, le système de réception précité comporte un détecteur omnidirectionnel en gisement qui ne peut éviter la présence de parasites lorsque le champ de vue contient le soleil ou un fond très brillant.

De plus, ce système connu ne répond pas aux exigences de discrétion actuelles puisque les faisceaux émis sont presque horizontaux. Pour ces derniers faisceaux horizontaux, c'est l'absorption atmosphérique et la loi en $I/d^2$ qui assurent une certaine confidentialité en atténuant l'éclairement transmis (où d est la distance à l'émetteur). Enfin, l'horizontalité du faisceau émis par l'équipement émetteur constitue un inconvénient pour la couverture du porte-avion par les occultations possibles par d'autres avions de types différents; la finesse du faisceau empêche son utilisation par des avions possédant des récepteurs à des hauteurs différentes.

Quant à FR-A-2 313 716, il enseigne un système de lecture composé d'un ensemble récepteur lié mécaniquement à un support réfléchissant contenant un message imprimé. La partie optique de réception de message est aussi utilisée pour l'émission.

La présente invention se propose de remédier aux différents inconvénients ci-dessus en améliorant la confidentialité du faisceau émis par l'équipement émetteur, en évitant les occultations par les autres avions rangés sur le porte-avion dans une application marine, en rendant possible la réception par les différents avions, quelle que soit la hauteur des avions ou de leurs récepteurs.

L'invention vise à placer le ou les émetteurs du faisceau optique le plus haut possible dans la mâture du porte-avion, tous les émetteurs émettant alors le même signal optique. L'invention vise donc également à réaliser des équipements récepteurs capables de recevoir de façon omnidirectionnelle en gisement et en site.

L'invention concerne donc un système conforme à la revendication 1.

Selon une caractéristique de l'invention, la mosaïque est une mosaïque "plan focal" connue en soi, par exemple dont les éléments sont agencés suivant une disposition lignes-colonnes, ladite mosaïque couvrant le champ de l'objectif.

Selon une autre caractéristique de l'invention, la mosaïque est une barrette, formée de n détecteurs, ayant la forme d'un secteur $\Delta\alpha$ de cercle centré en O, chaque détecteur $D_i$ élémentaire ayant la forme d'une portion de ce secteur limité par deux segments perpendiculaires à l'axe de ladite barrette, ladite barrette étant mobile autour du point O.

Selon une autre caractéristique de l'invention, la mosaïque est une barrette ayant la forme d'un secteur $\Delta\alpha$ de cercle centré en O, chaque détecteur $D'_i$ élémentaire ayant la forme d'une portion de ce secteur limité par deux segments parallèles entre eux et non perpendiculaires à l'axe Ox de cette barrette, ladite barrette étant également mobile autour du point O.

Selon une autre variante, la barrette est la juxtaposition à distance angulaire $\varepsilon$ de deux demi-barrettes linéaires $D_{2p}$, $D_{2p+1}$ composées chacune de n/2 éléments détecteurs, lesdits n éléments détecteurs étant disposés en quinconce d'une demi-barrette à l'autre, lesdits éléments pairs et impairs couvrant avec chevauchement, dans le sens de l'axe de ladite barrette, chaque intervalle laissé vide par l'autre demi-barrette, ladite barrette étant également mobile autour du centre O.

En outre, selon une autre variante, la mosaïque est formée d'une adjonction régulière de m barrettes, distantes deux à deux du même intervalle angulaire $\varepsilon$, afin de couvrir toute la circonférence, la rotation autour du centre O de ladite mosaïque devenant très faible et égale à $\Delta\alpha + \varepsilon$, ladite rotation étant alternative ou non.

Selon une autre dernière variante, la mosaïque fixe est formée d'une adjonction régulière de q barrettes identiques, centrées chacune en O, juxtaposées avec une distance angulaire $\gamma$ de telle sorte que $q(\Delta\alpha + \gamma)$ égale 360 degrés.

Selon les variantes des mosaïques, l'intervalle $(\varepsilon, \gamma)$ séparant deux éléments détecteurs $D_i$ adjacents quelconques est choisi inférieur à la dimension de la tache T optique placée dans le plan focal de l'objectif.

En outre, la mosaïque est déplacée dans le plan focal de l'objectif autour du foyer principal de cet objectif, afin de balayer 360 degrés en azimut.

De plus, les moyens d'entraînement de la mosaïque comprennent un moteur pas-à-pas, tandis que la mosaïque est entraînée en rotation par un système d'entraînement simplifié.

La mosaïque couvre un angle $\Delta\theta$ en site égal à 90 degrés, le nombre n d'éléments détecteurs étant judicieusement choisi.

De plus, la (les) source(s) émettrice(s) émet(tent) dans un domaine spectral donné tandis que l'objectif est sensiblement monospectral (multispectral) à bande(s) étroite(s) et que les éléments détecteurs $D_i$ sont choisis sensibles à la (les) même(s) longueur(s) d'onde(s).

En outre, le domaine spectral est par exemple l'infrarouge, le visible, l'ultraviolet. Les sources émettrices émettent des messages différents ou le même message.

Le système de l'invention comporte des moyens pour extraire, amplifier, multiplexer sur deux (k) voies adjacentes les signaux fournis par deux (k) éléments détecteurs $D_i$ adjacents, des moyens pour appliquer lesdits signaux à l'entrée d'un circuit de traitement, des moyens pour discriminer les bruits engendrés du signal utile, des moyens pour traiter le signal et en extraire le signal modulé de chaque source émettrice.

Le circuit de traitement de l'invention comporte des moyens pour commander le balayage en azimut de la mosaïque.

Lorsque deux sources émettrices par exemple émettent le même signal et sont placées à une certaine distance l'une de l'autre, en réception, le circuit de discrimination permet, dans le cas où le signal reçu présente même grandeur que le bruit engendré par le soleil, de décider de rechercher l'autre source exemptée de bruit, par exemple grâce au signal fourni par un autre élément détecteur $D_j$ (resp. grâce à une modification d'azimut) si les sources émettrices sont placées l'une au-dessus de l'autre (resp. si les sources sont placées à même hauteur horizontalement).

En outre, la position s du détecteur $D_s$ recevant le signal recherché permet d'en déduire en sortie du circuit de gestion et commande les coordonnées de la source recherchée.

L'invention sera mieux comprise à l'aide de la description suivante, en référence au dessin en annexe, sur lequel

La figure 1 représente un exemple de disposition relative émetteur récepteur dans une application porte-avion;

la figure 2 représente un exemple d'équipement électro-optique récepteur porté par l'avion;

la figure 3a représente une portion de l'espace vue par un élément détecteur et la figure 3b représente sa projection dans le plan focal de l'objectif;

la figure 4 représente la courbe de variation de la distance entre le foyer principal et l'image de la source émettrice dans le plan focal en fonction de l'angle d'incidence du faisceau lumineux reçu;

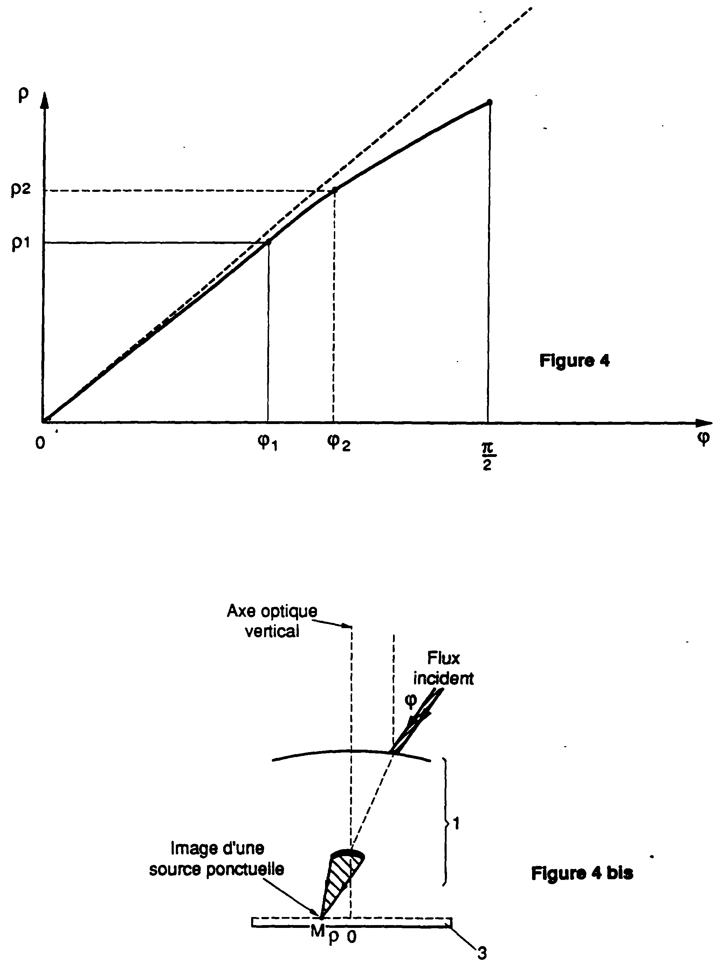

la figure 4 bis représente une vue en coupe du trajet optique du signal incident dans le dispositif de la figure 4 selon l'invention jusqu'à son arrivée dans le plan focal de l'objectif;

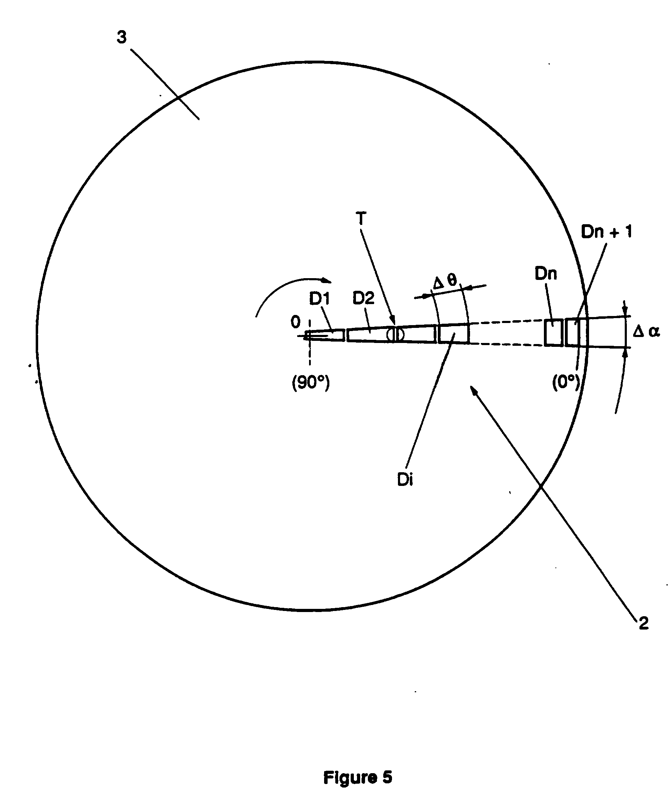

la figure 5 représente une vue de dessus d'une barrette de détection selon l'invention;

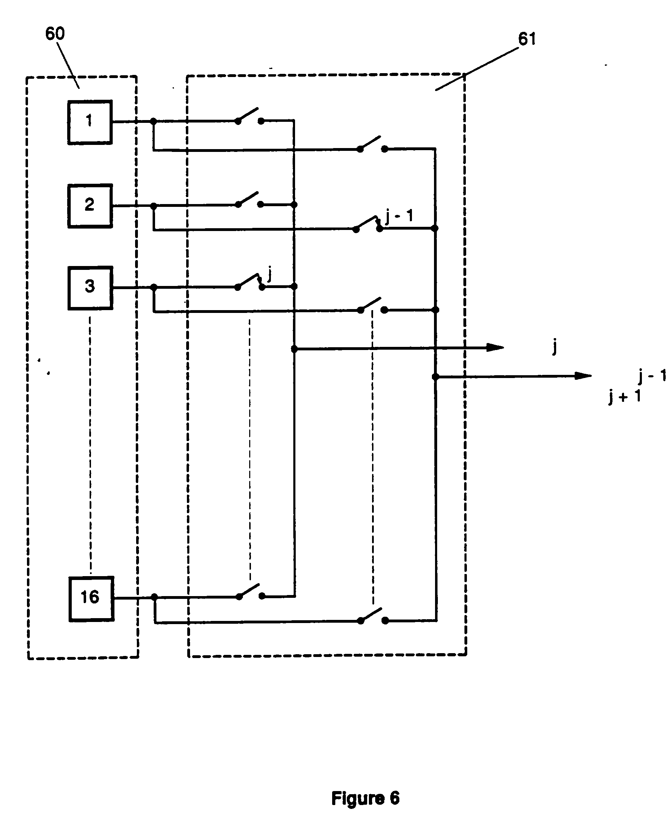

la figure 6 représente un exemple de circuit de multiplexage des signaux fourni par seize détecteurs sur deux voies simultanées adjacentes;

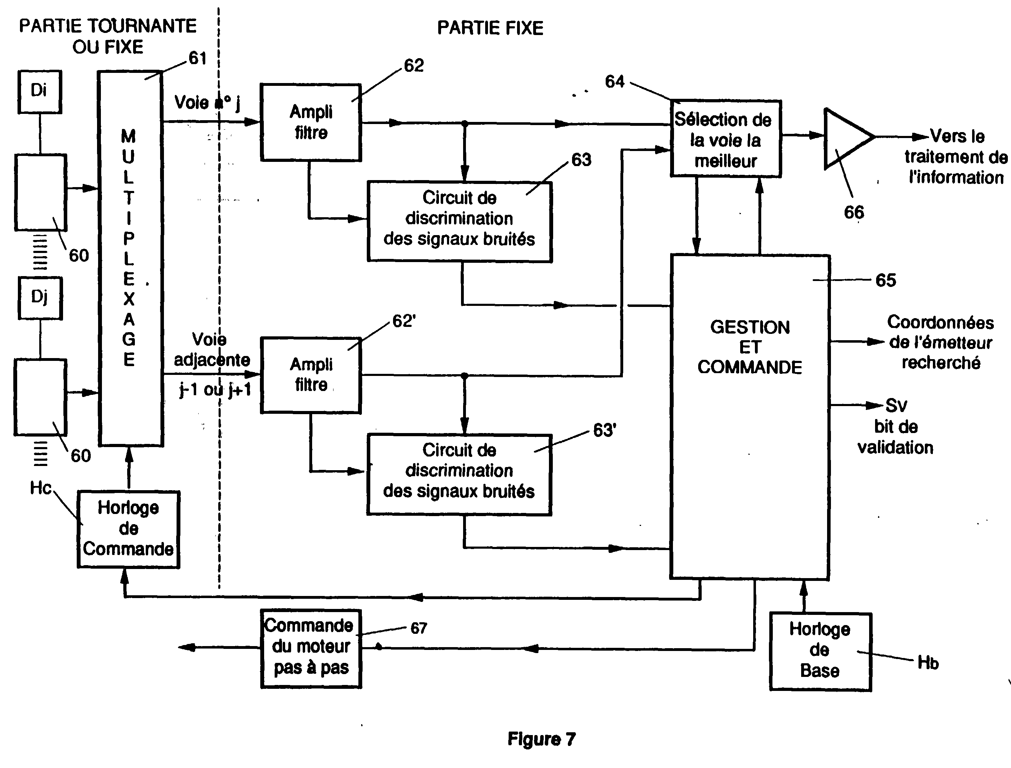

la figure 7 représente un bloc diagramme du dispositif de traitement des signaux reçus;

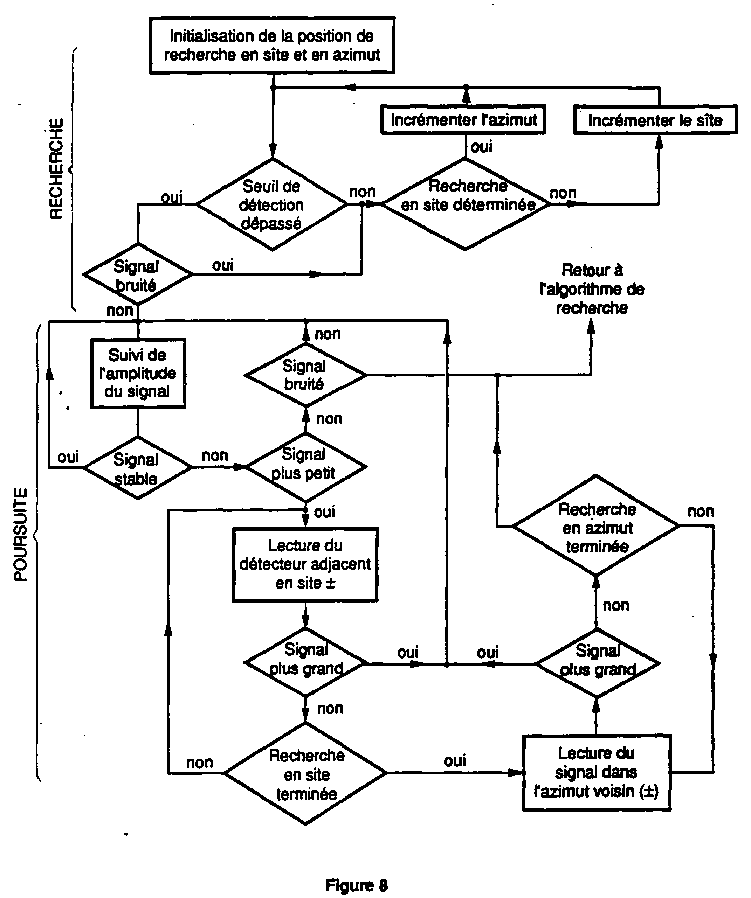

la figure 8 représente un algorithme de recherche et de poursuite de la source modulée;

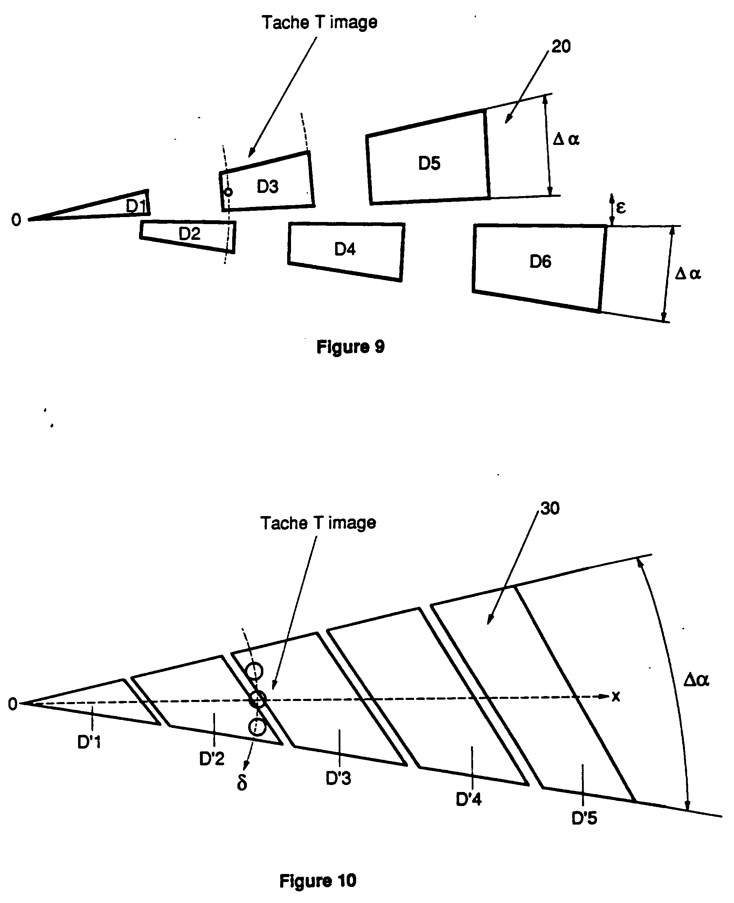

la figure 9 représente un cas particulier d'une barrette formée de deux demi-barrettes, chacune comportant n/2 éléments placés en quinconce;

la figure 10 est une variante de barrette composée de n photodétecteurs;

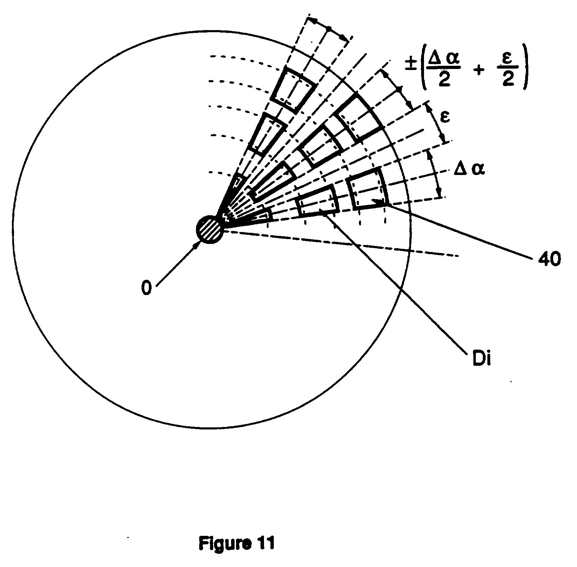

la figure 11 représente une mosaïque formée d'éléments photodétecteurs, également placée dans le plan focal de l'objectif de la figure 4 et couvrant presque tout le champ optique;

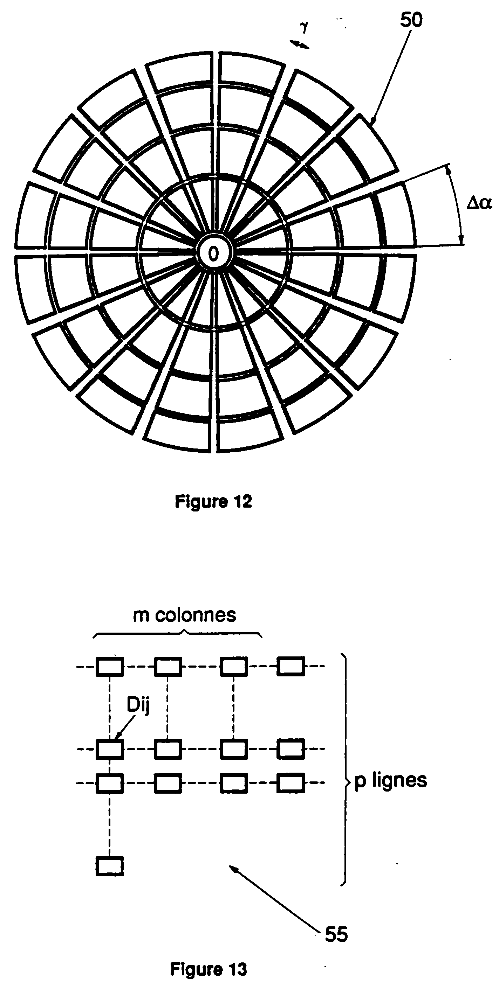

la figure 12 représente une autre mosaïque formée d'éléments photodétecteurs, également placée dans le plan focal de l'objectif de la figure 4, couvrant tout le champ optique et

la figure 13 représente une variante de mosaïque, mosaïque "plan focal".

La description détaillée suivante concerne une application au porte-avion dans laquelle des informations sont communiquées depuis la tourelle vers les avions prêts au décollage. Mais il est bien évident que la présente invention ne se limite pas à une telle application ainsi qu'il apparaitra dans la suite de la description.

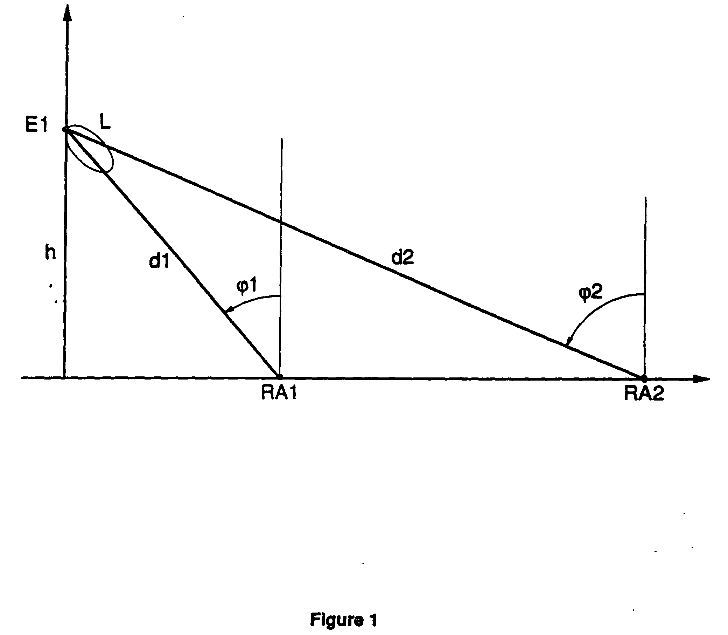

En se référant à la figure 1, $E_1$ est un émetteur du faisceau optique placé dans la mâture du porte-avion et émet un signal reçu par les récepteurs $R_{A1}$ et $R_{A2}$ des avions $A_1$ et $A_2$. La puissance utile reçue par le récepteur $R_{A2}$ dépend essentiellement de sa position par rapport à la source, du diagramme de rayonnement de la source $E_1$, des conditions météorologiques par exemple. Pour un diagramme de rayonnement circulaire, la puissance reçue par le récepteur $R_{A1}$ est plus grande que celle reçue par le récepteur $R_{A2}$. pour optimiser le mieux possible la puissance reçue par tous les récepteurs du porte-avion, il est donc souhaitable de placer l'émetteur $E_1$ le plus haut possible dans la mâture; le diagramme d'émission pourra alors être dirigé vers le bas, ce qui procure de multiples avantages tels que :

- une discrétion assurée au-delà de 100 à 200 mètres du porte-avion,
- une absence d'occultations par les autres aéronefs rangés sur le pont,
- une bonne réception quelle que soit la hauteur des avions ou de leurs récepteurs.

Une hauteur de l'ordre de 25 mètres peut être raisonnablement envisagée dans l'application porte-avion, pour placer l'émetteur $E_1$ dans la mâture. Une source coopérative $E_1$ du système peut être par exemple constituée de plusieurs photodiodes, par exemple en Ga As émettant à 0,93 $\mu$m (200 mW par diode) ou en Ga Al As émettant à 0,81 $\mu$m (jusqu'à 10 W par diode) associées à des optiques d'émission. La source peut être par exemple modulée à 100 Khz et de bande passante utile du message 20 Khz. Les récepteurs $R_{A1}$, $R_{A2}$ de l'invention présentent la particularité d'être omnidirectionnels dans l'hémisphère supérieur ainsi qu'il apparaitra dans la suite de la description.

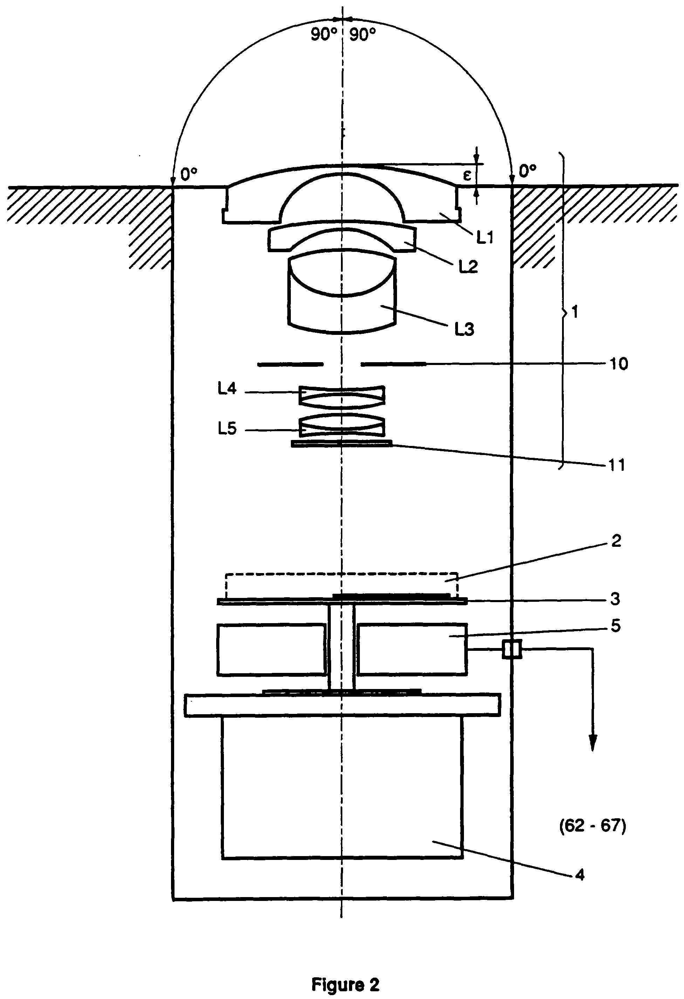

La figure 2 représente la tête électro-optique de l'équipement récepteur porté par l'avion. Cette tête électro-optique se compose essentiellement d'un objectif 1 grand champ de type fish eye, par exemple formé d'une pluralité de lentilles $L_1$, $L_2$, $L_3$, $L_4$, $L_5$ à champ de vue circulaire susceptible de couvrir en site un champ de $\pm$ 90 degrés. L'objectif 1 omnidirectionnel est par exemple formé d'un groupe convergent de trois lentilles $L_1$ $L_2$ $L_3$, formant une image intermédiaire de la pupille d'entrée (quelle que soit la direction du faisceau incident) au niveau d'un écran 10 métallique à ouverture circulaire, et d'un groupe de deux lentilles $L_4$ $L_5$ formant l'image de tous les points du champ semi-hémisphérique de l'objectif 1 dans le plan du plateau 3. Un tel objectif 1 émerge de l'avion d'une épaisseur $\varepsilon$ très faible (par exemple de l'ordre de 6 mm). L'écran circulaire 10 est suffisamment en retrait par rapport à la paroi extérieure de l'avion pour procurer au système de l'invention une parfaite protection contre les émissions radioélectriques.

En outre, le filtre spectral 11 permet, ainsi placé entre l'objectif d'entrée 1 et le plateau 3, de limiter avant détection le flux lumineux reçu à la seule bande passante spectrale utile, c'est-à-dire celle de la source coopérative.

Sur le plateau 3, plan focal de l'objectif 1, on place une barrette 2 linéaire de n détecteurs couvrant un champ instantané de 90 degrés en site et de $\Delta\alpha$ degrés d'azimut. Cette barrette 2, représentée en vue de dessus sur la figure 5, est par exemple formée d'une pluralité de détecteurs élémentaires $D_1$, $D_2$, $D_3$, $D_4$,...$D_n$, chaque détecteur $D_i$ pouvant être par exemple une photodiode, polarisée en inverse pour diminuer sa capacité qui est source de bruit. Les détecteurs élémentaires $D_i$ présentent une structure en secteur limité par deux arcs de cercle de même centre O, foyer principal de l'objectif 1. Ces arcs de cercle sont sensiblement assimilables à des segments de droites parallèles.

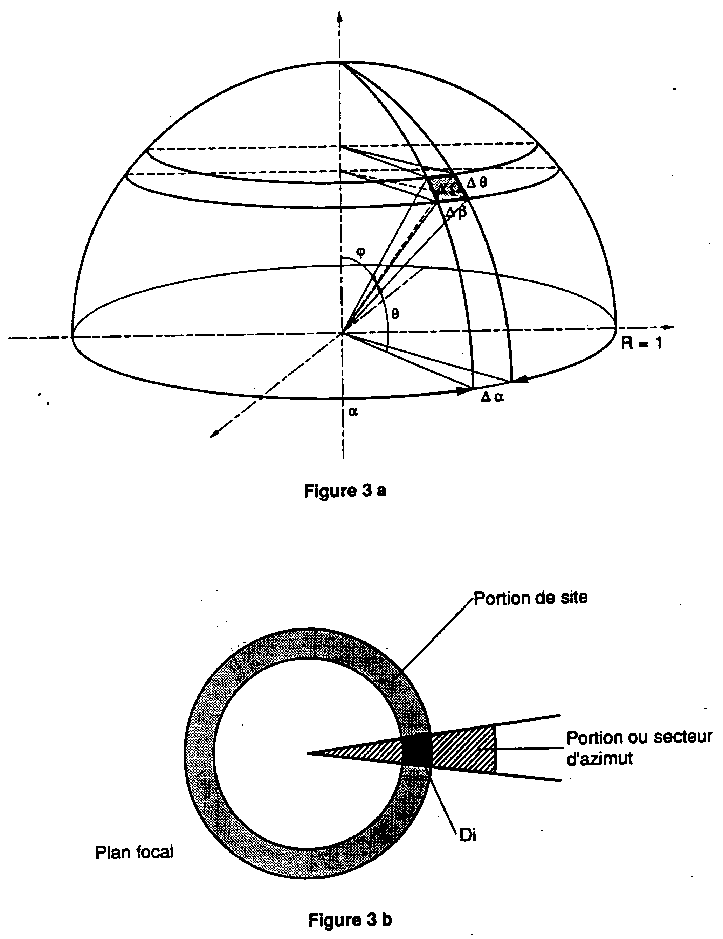

Cette structure des détecteurs $D_i$ s'explique de la manière suivante : un élément de secteur d'azimut correspond dans le plan focal de l'objectif 1 à un secteur du cercle définissant le champ de vue de cet objectif 1 en azimut. Une portion de site correspond, dans ce même plan focal, à un anneau circulaire centré sur le foyer O de ce même objectif 1. L'intersection d'une portion de site et d'un secteur d'azimut détermine la forme dans le plan focal d'un élément détecteur $D_i$ : c'est la surface réalisant l'intersection d'un anneau par un secteur (figure 3b).

Un tel choix de détecteurs $(D_i)_{i=1,n}$, le nombre n représentant le nombre de détecteurs d'une barrette 2, confère à chaque détecteur $D_i$ un champ de vue instantané en site très inférieur à 90 degrés (en moyenne 90 degrés/n) et un champ de vue instantané en azimut de l'ordre de $\Delta\alpha = 360/p$, p étant un nombre entier choisi de façon appropriée.

La figure 3a représente la portion de l'espace vue par un élément détecteur $D_i$ selon l'invention. $\Delta\Omega$ représente l'angle solide de l'espace vu par un élément photodétecteur $D_i$. Cet angle solide $\Delta\Omega$ s'écrit :

$$\Delta\Omega = \Delta\beta . \Delta\theta$$

$\Delta\theta$ étant la portion de site et $\Delta\beta$ étant la portion d'angle qui lui est perpendiculaire; l'angle d'azimut élémentaire $\Delta\alpha$ est lié à $\Delta\beta$ par la relation

$$\Delta\alpha = \frac{R\,\Delta\beta}{R\cos\theta} = \frac{\Delta\beta}{\cos\theta},$$
$$\text{soit } \Delta\beta = \Delta\alpha\cos\theta$$

d'où l'angle solide élémentaire $\Delta\Omega = \Delta\alpha\,\Delta\beta$ . Lorsque $\Delta\alpha$ est petit et $\Delta\theta$ fini, $\Omega$ s'écrit :

$$\Omega = \Delta\alpha \int_{\theta_1}^{\theta_2} \cos\theta\, d\theta$$

$$\Omega = \Delta\alpha\,(\sin\theta_2 - \sin\theta_1)$$

ou encore en fonction de l'angle

$$\varphi = \frac{\pi}{2} - \theta$$

$$\Omega = \Delta\alpha\,(\cos\varphi_1 - \cos\varphi_2) \qquad (1)$$

Les valeurs $\varphi_1$ et $\varphi_2$ sont en particulier liées aux distances des segments délimitant chaque détecteur $D_i$.

La figure 4 représente, pour un certain objectif grand champ, la courbe représentative de $\rho$ en fonction de l'angle $\varphi$ d'incidence du faisceau lumineux reçu, où $\rho$ est la distance entre le foyer principal O de l'objectif 1 et l'image de la source émettrice supposée ponctuelle dans le plan focal. Pour des angles $\varphi$ faibles, $\rho$ varie quasi linéairement en fonction de l'angle $\varphi$ d'incidence. Par contre, lorsque l'angle d'incidence $\varphi$ s'approche de $\pi/2$ (récepteur très éloigné), la distance $\rho$ varie moins vite que l'angle d'incidence, si bien que pour un même angle $\Delta\varphi$ élémentaire, la dimension $(\rho_2 - \rho_1)$ du détecteur $D_j$ est plus

petite, comme illustré sur la figure 4 bis.

L'inconvénient de pouvoir détecter dans un espace étendu en site est d'augmenter les sources de bruit extérieures. Pour diminuer ce bruit, on utilise une barrette 2 formée de n éléments détecteurs $(D_i)_{i=1,n}$.

En effet, plus un élément détecteur $D_i$ est petit et plus cet élément $D_i$ couvre un angle solide petit, plus le bruit est faible. Par conséquent, tant que l'angle solide de chaque élément $D_i$ est supérieur à l'angle de vue de la source et pourvu que la tache optique en M dans le plan du plateau 3 reste inférieure à la taille de l'élément $D_i$, la sensibilité s'améliore avec l'augmentation du nombre n d'éléments détecteurs $D_i$.

Par rapport à un système monodétecteur, une barrette 2 à détecteurs élémentaires $D_i$ procure un gain important : si le champ de vue moyen instantané d'un détecteur élémentaire $D_i$ est de $(90/n)\,\Delta\alpha$ degrés carrés, en prenant le cas où n égale 16 et $\Delta\alpha$ égale 360 degrés/160, l'angle solide de vue $\Omega_i$ de ce détecteur $D_i$ est égal à 5,565 degrés x 2,25 degrés.

Le rapport entre l'angle de vue total de l'objectif 1 et l'angle solide $\Omega_i$ élémentaire de ce détecteur $D_i$ fournit le nombre 1647. Entre un détecteur unique couvrant tout le champ et le détecteur $D_i$ de l'invention, le bruit dû au fond extérieur est divisé par

$$\sqrt{1647},$$

soit environ 40, ce qui procure un gain de 32 dB.

Le découpage de la barrette 2 de détection en n éléments détecteurs $D_i$ dans le sens du site, comme représenté sur la figure 5, s'effectue pour optimiser le rapport signal à bruit obtenu tout le long de la barrette 2. En particulier, le bruit dépend des paramètres suivants :

- la répartition des luminances dans le ciel,
- l'angle de site de réception, l'absorption du rayonnement solaire étant d'autant plus importante que cet angle est grand,
- la puissance continue reçue du fond par l'élément correspondant donnée par $P = L_f \times \Omega$ ($L_f$ luminance du fond continu, $\Omega$ angle solide vu par cet élément détecteur) (relation 1),
- la capacité $C_d$ de l'élément détecteur et celle des fils de liaison avec le préamplificateur.

Le bruit proportionnel à $\sqrt{P}$ diminue avec la puissance reçue du fond. Le signal reçu dépend de l'intensité I du rayonnement émis par la source $E_1$ coopérative dans la direction du récepteur, de la distance d du récepteur à cette source qui est fonction de l'angle $\varphi$ et de la hauteur h de l'émetteur et enfin de la transmission atmosphérique $\tau$ sur le trajet source-récepteur.

On peut écrire que le signal est proportionnel à

$$\frac{\tau_I}{d^2},$$

avec $d = h\,\mathrm{tg}\,\varphi$

Lorsque le fond ne limite pas les performances du détecteur, c'est la capacité $C_d$ du détecteur lui-même associé à son préamplificateur qui est la source principale de bruit. Dans ces conditions, on trouve encore que le bruit est d'autant plus faible que la surface du détecteur est plus faible.

Par exemple, les détecteurs $D_n$ les plus éloignés de l'axe optique analysent le paysage au voisinage de l'horizon ( $\varphi \simeq \pi/2$ ). Or, au voisinage de l'horizon, l'émission directe et diffuse du soleil est moins importante donc le bruit sera moins important; c'est la capacité des détecteurs proportionnelle à leur surface qui est la source de bruit la plus importante. Mais pour ces détecteurs, la distance d est grande (fig. 1).

Le choix de la surface des éléments détecteurs résulte donc de divers compromis et en particulier du diagramme de rayonnement de la source. Dans l'application envisagée, si une source parasite est petite par rapport à un détecteur $D_i$ (par exemple le soleil fait 0,5 degrés), l'augmentation du nombre d'éléments détecteurs et la diminution de l'angle de vue de chacun d'eux diminue la probabilité d'être parasité, mais ne diminue pas l'intensité de ce parasite lorsque celui-ci se produit.

Ainsi, en présence de soleil, dans le cas du porte-avion, la couverture du pont par l'émetteur $E_1$ sera d'autant meilleure que la surface sensible de l'élément détecteur $D_i$ sera faible. Seul sera bruité l'élément détecteur $D_j$ placé dans l'alignement émetteur E1-soleil; ce détecteur n'assure alors pas sa fraction de couverture du pont.

Pour pallier un tel cas de figure, le système de transmission de l'invention préconise d'utiliser deux sources $E_1$ $E_2$, chacune d'elles émettant le même signal codé, placées à même hauteur dans la mâture du porte-avion à une distance par exemple de l'ordre de 15 mètres. L'angle de gisement entre les deux sources $E_1$ $E_2$ est alors supérieur à 4 degrés ce qui, au regard des 0,5 degrés perturbés par le soleil, permet d'assurer une bonne réception du message utile au niveau de l'un des détecteurs de la barrette 2 en provenance de l'émetteur le plus éloigné du soleil, donc le moins parasité.

On notera que, dans un tel cas particulier où l'angle de gisement entre les deux sources $E_1$ $E_2$ d'un même groupement est supérieur à 4 degrés, il est supérieur à la couverture azimutale de la barrette 2 (par exemple égale à 360 degrés/160, soit 2,25 degrés dans le cas où p est choisi égal à 160).

Le fait de placer deux sources coopératives $E_1$ $E_2$ dans la mâture du porte-avion au lieu d'une seule source présente en outre l'avantage d'augmenter la fiabilité du système car le risque de panne d'un émetteur n'est pas nul. Ces sources $E_1$ $E_2$ peuvent encore être placées l'une au-dessus de l'autre.

Pour assurer le balayage en azimut du champ, on place selon l'invention la barrette 2 de l'invention sur un plateau 3 placé dans le plan focal de l'objectif 1. Ce plateau 3 est tournant autour du foyer 0 principal de cet objectif 1, par exemple au moyen d'un moteur 4 pas à pas placé sous ce plateau 3 comme représenté sur la figure 2. Le pas du moteur 4 est choisi très faible, par exemple à 200 ou 400 pas, soit 1.8 degrés ou 0.9 degré. Ce moteur tourne à faible vitesse, par exemple 1 tour/seconde. Pour assurer les liaisons électriques entre l'électronique située sur ce plateau 3 et l'électronique d'exploitation fixe, on interpose, entre ce plateau 3 et le moteur 4 par exemple un joint tournant 5. Il permet la libre rotation sur k x 360 degrés du plateau 3. Mais il est encore possible d'utiliser un simple toron d'extraction des signaux, ce qui confère une liberté de rotation de 360 degrés ± quelques degrés.

Outre la barrette 2 de l'invention, le plateau 3 supporte également n préamplificateurs 60 et des circuits électroniques d'extraction des signaux reçus par chaque détecteur $D_i$ comme représenté sur la figure 6. Ces circuits 60 ont pour fonction de polariser les détecteurs $D_i$, d'amplifier les signaux reçus et de les appliquer à l'entrée d'un circuit de multiplexage 61.

L'intégration préamplificateur-détecteur est suffisamment miniaturisée pour éviter les inductions parasites sur la liaison électrique. Ces préamplificateurs 60 sont par exemple des préamplificateurs opérationnels intégrés à faible bruit. Ils conviennent tout à fait pour la détection de messages de 20 Khz de bande passante et une fréquence centrale de 100 Khz.

Le circuit 61 de multiplexage, schématisé sur la figure 6 par 2n interrupteurs représentant l'ouverture ou la fermeture des portes des voies j et j ± 1 adjacente, permet de fournir les signaux issus des n détecteurs $D_i$ sur deux voies adjacentes simultanées. Ce circuit 61, porté par le plateau 3, permet ainsi de pouvoir lire deux éléments détecteurs contigus $D_j$ et $D_j$ ± 1 en même temps. Une horloge $H_c$ externe au plateau 3 commande l'ouverture et la fermeture des portes des voies comme représenté sur la figure 7.

Ces signaux des voies j et j ± 1 issus du multiplexeur 61 sont appliqués respectivement à l'entrée des amplificateurs filtres 62, 62'. Ces amplificateurs filtres 62, 62' font partie des circuits de traitement fixes extérieurs au plateau 3 qui ont pour rôle essentiel d'exploiter les deux signaux issus du multiplexeur 61, c'est-à-dire de rechercher et si nécessaire de poursuivre la source $E_1$ coopérative afin d'obtenir un signal stable émis par cette source $E_1$ et en extraire le message utile. Cette électronique de traitement fixe comprend en outre deux circuits 63, 63' de discrimination des signaux bruités (par exemple bruités par le soleil). Chaque circuit de discrimination 63 (63') reçoit, d'une part, le signal d'entrée du circuit 62 (62'), d'autre part, le signal de sortie de ce même circuit et fournit le résultat à l'entrée du circuit 65 de gestion et de commande. Les circuits amplificateurs 62, 62' fournissent également leur signal de sortie à l'entrée d'un circuit 64 de sélection de la meilleure voie (j, j ± 1). Le résultat de la sélection effectuée par le circuit 64 est fourni au circuit 65 de gestion et de commande ainsi qu'à un circuit 66 amplificateur. Ce circuit 66 reçoit le signal filtré dans sa bande passante utile et le fournit en sortie, après amplification et écrêtage ou mise en forme, à un dispositif connu en soi de traitement de l'information.

Le circuit 65 de gestion et de commande est rythmé par une horloge $H_b$ de base. Ce circuit 65 a de multiples fonctions : il fournit un signal à l'entrée de l'horloge $H_c$ de commande du multiplexeur 61 permettant d'initialiser une opération sur deux voies adjacentes (j, j ± 1). Il fournit également un signal au circuit 67 de commande du moteur 4 pas à pas; il fournit encore un signal vers le circuit 64 de sélection de la meilleure voie j ou j ± 1; il fournit un signal $S_v$ de validation vers le circuit de décodage de l'information (ne faisant pas l'objet du présent brevet); enfin, il fournit les coordonnées angulaires de l'émetteur recherché et trouvé.

Le circuit 65 effectue les multiples opérations de calcul, de sélection de voie, de décision de suivi des seuils de poursuite et de commutation entre recherche et poursuite. En effet, lorsque la direction de visée de la source coopérative a été trouvée, le moteur 4 pas à pas s'arrête sur la direction d'azimut correspondante et le circuit de multiplexage 61 fournit la voie j parmi les n voies correspondant aux n détecteurs ainsi que la voie j ± 1 adjacente. Le circuit 65 commande la délivrance par le circuit 64 du signal filtré dans sa bande passante à destination d'un circuit non représenté de décodage de l'information.

La figure 8 illustre un algorithme de recherche et de poursuite de la source en présence de bruit parasite solaire. On initialise le système pour une position donnée en site et en azimut; la recherche en azimut est effectuée par le moteur pas à pas qui entraîne le plateau 3; la recherche en site, au contraire, est effectuée par la lecture multiplexée des n éléments détecteurs $D_i$, lecture réalisée dans la période de 1 pas du moteur. L'horloge $H_b$ commande à la fois la vitesse de rotation du moteur et l'horloge $H_c$ d'adressage du multiplexeur 61. Ceci permet la synchronisation entre la rotation pas à pas du plateau 3 et le multiplexage des 2n voies.

On notera que le temps de maintien d'une voie à l'entrée du multiplexeur 61 doit être très grand, lors de la phase de recherche, par rapport à la période moyenne des signaux mesurés, ce qui implique une vitesse de rotation limitée pour le plateau 3.

Dans l'exemple numérique précité où p est choisi égal à 160, le temps de passage de l'image de la source coopérative sur un détecteur $D_i$ pendant la recherche en azimut est égale à 1/160, soit 6,25 ms.

Le temps de multiplexage du signal détecté par un détecteur $D_i$ est inférieur à 6,25/n, soit 390 µs. Si la fréquence du signal est de 100 Khz, une période de ce signal dure 10 µs, ce qui permet d'analyser correctement le signal.

Pendant le temps de lecture d'un détecteur $D_i$, après un court instant d'établissement du signal reçu, on compare l'amplitude du signal à un seuil de détection; dans le cas où le seuil est dépassé, on regarde (figure 7) si le signal n'est pas du bruit induit par l'éclairement trop violent dû au soleil, au moyen du circuit 63 de discrimination des signaux bruités.

Une méthode pour effectuer ce traitement est de mesurer la valeur efficace du signal entre deux bandes électriques différentes, la bande la plus étroite correspondant à la bande utile du signal modulé de la source coopérative. Si le signal reçu est bien le signal utile, les deux valeurs efficaces sont égales; dans le cas contraire, le rapport des valeurs mesurées dépend du rapport des bandes passantes électriques choisies.

Suivant les applications, il se peut que le circuit détecteur associé à son préamplificateur soit saturé en présence de soleil. Donc, dans ces conditions, il n'y a pas de signal modulé en sortie préamplificateur et donc pas de risque d'erreur dans la recherche de la source coopérative. Le seuil de détection est choisi de telle sorte que le taux de fausses alarmes reste acceptable dans l'application requise.

Si le seuil de détection SD n'a pas été dépassé, on incrémente un nouvel azimut jusqu'à ce que ce seuil soit effectivement dépassé.

Lorsque la source est ainsi trouvée, on passe à l'algorithme de poursuite afin de pallier les évolutions lentes dues aux déplacements relatifs entre l'émetteur (source coopérative) et le récepteur (détecteur $D_i$). On recherche alors l'évolution de l'amplitude du signal issu du circuit 64. Si l'amplitude du signal diminue dans un certain rapport représenté par un seuil de stabilité, il est nécessaire de déclencher la poursuite de la source.

L'algorithme de poursuite prévoit ensuite deux cas de non stabilité du signal.

Si le signal devient plus grand, on utilise le même circuit 63 de discrimination de signaux bruités que lors de la poursuite pour décider de la recherche d'une seconde source.

Si le signal a diminué, on commence par lire l'amplitude obtenue sur les éléments détecteurs adjacents; la comparaison est facilitée par la présence simultanée des signaux des voies j et j ± 1. Si le signal n'a pas retrouvé sa valeur précédente, on effectue alors une rotation en azimut de ± 1 pas afin d'obtenir le niveau de tension optimal.

Ceci permet de prévoir une augmentation trop forte du signal par exemple dûe au passage lent du soleil au voisinage de la source; si le signal sort de sa fourchette de stabilité, l'algorithme de poursuite permet de résoudre de la même façon la recherche de la source coopérative.

Le circuit 65 de gestion et de commande est chargé d'une multitude de fonctions telles que la commutation entre la phase de recherche et la phase de poursuite, la comparaison entre les amplitudes de signaux et les seuils $S_d$ correspondants, la décision en fonction des résultats des comparaisons et de la qualité du signal, la gestion des horloges $H_c$, la commande du moteur pas à pas, la commande du multiplexage, le calcul des seuils de poursuite nécessaires pour le suivi de l'amplitude du signal, l'élaboration d'un bit de validation du signal appliqué au circuit 64 de sélection. Ce circuit 65 peut être réalisé, soit en logique câblée, soit au moyen d'un microprocesseur muni d'un système d'acquisition et de numérisation des tensions analogiques représentant les amplitudes des signaux.

Dans le cas évoqué ci-dessus où deux sources coopératives sont placées à même hauteur et émettent le même message, supposons qu'une des deux sources $E_1$ par exemple et le soleil soient vus en même temps par le même élément détecteur $D_i$ et supposons que le bruit engendré par le soleil soit du même ordre de grandeur que le signal reçu. Le circuit 63 de discrimination signal-bruit permet alors de s'en apercevoir et de décider de poursuivre la recherche de l'autre source $E_2$ exempte de bruit, par exemple au moyen d'un autre élément détecteur $D_j$ si les deux sources sont superposées verticalement, par exemple au moyen d'un autre azimut si les deux sources sont placées à la même position horizontale. Ainsi, lors de la poursuite et du suivi de l'amplitude du signal, si le signal a augmenté, il est avantageux d'utiliser le même circuit 63 de discrimination des signaux bruités pour décider de la recherche de la seconde source.

La figure 9 représente une variante de réalisation de la barrette de détection selon l'invention. La barrette 20 de la figure 9 est en réalité la juxtaposition à une distance angulaire ε convenablement choisie de deux demi-barrettes linéaires semblables à la barrette 20 composées chacune de n/2 éléments détecteurs $D_i$, chaque demi-barrette étant également centrée en O, foyer de l'objectif 1. Les n éléments détecteurs sont disposés en quinconce d'une demi-barrette ($D_2$, $D_4$,... $D_{2p}$,...) à l'autre ($D_1$, $D_3$,... $D_{2p+1}$,...). Le long de l'axe de chaque demi-barrette, les éléments détecteurs $D_i$ sont en outre distants d'un intervalle un peu plus petit que la longueur moyenne d'un élément détecteur dans le sens d'un rayon, c'est-à-dire dans le sens du site. L'angle séparant les axes des deux barrettes est légèrement plus grand que $\Delta\alpha$, $\Delta\alpha$ étant encore l'angle de couverture instantané d'une demi-barrette en azimut. Chaque élément détecteur $D_{2p}$ d'une demi-barrette couvre dans le sens de l'angle sital au moins un intervalle laissé vide par l'autre demi-barrette ($D_{2p-1}$, $D_{2p+1}$).

L'avantage d'un tel dispositif est de permettre un chevauchement suffisant des détecteurs pairs et impairs. Ceci est particulièrement avantageux lorsque l'image T de la source se trouve à l'intersection de deux détecteurs $D_2$, $D_3$ selon la barrette 2 de la figure 5.

La barrette 20 de la figure 9 donne alors, si le chevauchement est suffisant, une détection sans affaiblissement au moyen de l'un des deux détecteurs $D_2$ ou $D_3$ (tache T contenue dans l'un des deux) alors que, dans le cas de la barrette 2 de la figure 5, l'affaiblissement était au moins égal à 2.

Le chevauchement est suffisant s'il est plus grand que la tache T, image fournie par l'objectif 1.

Les circuits 6 de traitement et de gestion de la poursuite et de la recherche autorisent le traitement de signaux fournis par la barrette 20 de la même façon que ceux fournis par la barrette 2 par une simple programmation du circuit 65.

La figure 10 représente une autre variante 30 de réalisation de la barrette formée de n éléments détecteurs ayant la forme d'un secteur également $\Delta\alpha$ de cercle centré en O, foyer de l'objectif 1, chaque détecteur $D'_i$ élémentaire ayant la forme d'une portion de ce secteur $\Delta\alpha$ limité par deux segments parallèles entre eux et non perpendiculaires à l'axe Ox de ladite barrette 30, tous les éléments détecteurs étant bien évidemment coplanaires. Ceci permet, lorsque la tache T se trouve juste à cheval sur deux éléments détecteurs $D'_2$ et $D'_3$ de la barrette de la figure 10, de faire tourner le plateau 3 supportant la barrette 30 d'un angle égal à une fraction de $\Delta\alpha$ dans un sens ou dans l'autre pour faire se déplacer la tache T afin qu'elle ne se trouve que sur un seul élément détecteur $D'_2$ ou $D'_3$.

Le choix de la surface des éléments tient également compte du bilan énergétique déjà mentionné ci-dessus.

Le circuit 65 de gestion et de commande peut avoir à tenir compte de la géométrie de la barrette 30 pour déplacer en rotation la barrette 30 dans le plan focal de l'objectif 1 pour reconnaître et décoder le signal émis par la source coopérative. Dans le cas d'un circuit programmé, une simple modification du programme permet cette lecture.

La figure 11 représente une variante de la figure 9. En effet, la mosaïque 40 de détection du signal optique modulé est toujours placée dans le plan focal de l'objectif 1 et est formée d'une adjonction régulière de m barrettes 20 distantes du même intervalle angulaire ε afin de couvrir toute la circonférence. Cette variante de la figure 11 procure une meilleure couverture du plan focal par la mosaïque bidimensionnelle; les éléments détecteurs $D_i$ sont semblables à ceux de la barrette 20 disposés en quinconce. Ils recouvrent approximativement la moitié de la surface du plateau 3 correspondant au champ de vue total de l'objectif 1. On a donc environ deux fois moins d'éléments détecteurs $D_i$ souvent coûteux; cette disposition autorise en outre une meilleure implantation des fils de sortie des détecteurs.

Pour réaliser la couverture totale du champ, il suffit de faire exécuter une rotation alternative au plateau 3 supportant la mosaïque 40 autour du point O et d'amplitude légèrement supérieure à $\Delta\alpha + \varepsilon$ pendant une période déterminée. Toutefois, cette rotation n'est nécessaire qu'en période de recherche ou de poursuite. Cette faible excursion de rotation facilite le transport des signaux du plateau 3 mobile vers l'électronique fixe. D'autre part, elle peut permettre une intégration possible de l'électronique de préamplification 60 entre les éléments détecteurs $D_i$.

Enfin, le moteur entraînant le plateau peut être plus rudimentaire que ceux nécessaires pour les réalisations précédentes.

La figure 12 représente une autre variante de mosaïque de l'invention, dite "plan focal", c'est-à-dire couvrant par des éléments photosensibles tout le champ de l'objectif 1. La mosaïque 50 est formée de l'adjonction de q barrettes 2 centrées en O de telle sorte que q($\Delta\alpha+\gamma$)

égale 360 degrés où $\gamma$ est la distance angulaire entre deux éléments détecteurs.

La couverture ne pouvant pas être obtenue à 100 %, la distance $\gamma$ dépend de la technologie employée pour leur fabrication; il suffit que la tache optique T obtenue dans le plan focal de l'objectif soit grande par rapport à l'intervalle $\gamma$ entre deux éléments détecteurs $D_i$ adjacents.

L'analyse site-azimut de la mosaïque 50 est effectuée par lecture des (m x n) + 1 éléments détecteurs $D_i$ (n dans le sens du site ou dans un secteur d'azimut donné $\Delta\alpha$, m dans le sens de l'azimut ou d'une tranche de cercle de rayon moyen P). L'ordre de lecture des éléments détecteurs $D_i$ dépend de l'application. Un multiplexage des signaux peut être effectué sur un nombre indifférent de voies.

Dans l'exemple de la figure 12, la mosaïque 50 est formée de 4 x 16 éléments détecteurs $D_i$ complétés par un détecteur central, n égale 4, m égale 16.

Enfin, une mosaïque 55 "plan focal" ligne-colonne p x m du commerce, comme représentée sur la figure 13, pourrait encore être placée dans le plan focal de l'objectif 1 de façon fixe. Il suffirait d'adapter le dispositif d'extraction et d'analyse des signaux de la figure 7, ce qui est encore à la portée de l'homme de l'art.

L'objectif 1 grand champ de l'invention est, comme illustré sur la figure 2, de type "Fish Eye" car il est particulièrement bien adapté au système de transmission décrit.

Les objectifs photographiques analogues du commerce sont construits pour obtenir de belles images : ils doivent être exempts d'aberrations chromatiques car ils travaillent dans tout le spectre visible (0,4 à 0,7 $\mu$m) et la tache optique qui est le résultat des phénomènes d'aberrations chromatiques et/ou géométriques doit être la plus petite possible dans tout le champ de façon à obtenir une bonne résolution d'image. Au contraire, dans le système de l'invention, la tache T optique peut être beaucoup plus grande du moment qu'elle reste à l'intérieur d'un détecteur élémentaire $D_i$ dont la taille est, dans les applications envisagées, nettement plus grande que l'élément d'image résolu sur une pellicule photographique.

De plus, les émetteurs $E_1$, $E_2$ sont des diodes émettrices ou même des diodes lasers pour lesquelles le spectre d'émission est étroit en comparaison de la longueur d'onde moyenne d'émission.

Les objectifs 1 "grand champ" selon l'invention n'ont donc pas à être corrigés des aberrations chromatiques. Leur construction est donc beaucoup plus aisée et leurs performances de clarté est meilleure. En effet, ces dernières dépendent, pour une focale F donnée, de l'ouverture, c'est-à-dire du diamètre $\emptyset$, de la pupille d'entrée; l'obtention simultanée d'un grand champ et d'une grande ouverture sont incompatibles avec une grande finesse de l'image. Pour les applications de l'invention, on pourra donc construire des objectifs plus ouverts donc permettant d'obtenir de bons rapports signal sur bruit.

Le choix de l'objectif 1 pourra en résumé être un compromis entre :

- le bilan d'énergie reçue (signal sur bruit),
- la finesse de localisation requise pour les émetteurs,
- la vitesse d'analyse du champ observé.

L'invention s'applique à la transmission unilatérale de sources multiples émettant chacune un message propre. Le dispositif de l'invention effectue alors une lecture site-gisement de chaque source, ce qui permet la localisation d'une source particulière ou le repérage de la position des différentes sources.

## Revendications

1. Système de transmission de messages émis par au moins une source ($E_1$) émettant un signal optique modulé, système comportant des moyens de réception dudit signal optique modulé, caractérisé par le fait que les moyens de réception sont essentiellement formés d'un objectif (1) grand champ sensiblement semi-hémisphérique et, dans le plan focal de cet objectif (1), d'un dispositif photorécepteur constitué d'une mosaïque (2, 20, 30, 40, 50, 55), de n éléments détecteurs, mobile ou fixe, n étant un entier naturel prédéterminé, capable de recevoir de façon omnidirectionnelle en gisement et en site et sensible au rayonnement dudit signal optique d'émission.

2. Système selon la revendication 1, caractérisé par le fait que la mosaïque est une mosaïque "Plan focal" (55) connue en soi, dont les éléments sont agencés suivant une disposition lignes-colonnes, ladite mosaïque (55) couvrant le champ de l'objectif (1).

3. Système selon la revendication 1, caractérisé par le fait que la mosaïque est une barrette (2) formée de n détecteurs ayant la forme d'un secteur ($\Delta\alpha$) de cercle centré en (O), chaque détecteur (Di) élémentaire ayant la forme d'une portion de ce secteur limité par deux segments perpendiculaires à l'axe de ladite barrette (2), ladite barrette (2) étant mobile autour du point (O).

4. Système selon la revendication 1, caractérisé par le fait que la mosaïque est une barrette (30) ayant la forme d'un secteur ($\Delta\alpha$) de cercle centré en (O), chaque portion détecteur ($D'_i$) élémentaire ayant la forme d'une portion de ce secteur limité par deux segments parallèles entre eux et non perpendiculaires à l'axe (Ox) de cette barrette (30), ladite barrette (30) étant également mobile autour du point (O).

5. Système selon la revendication 3, caractérisé par le fait que la barrette (20) est la juxtaposition à distance

angulaire ($\varepsilon$) de deux demi-barrettes linéaires ($D_{2p}$, $D_{2p+1}$) composées chacune de n/2 éléments détecteurs, lesdits n éléments détecteurs étant disposés en quinconce d'une demi-barrette à l'autre, les éléments pairs et impairs couvrant avec chevauchement, dans le sens de l'axe de ladite barrette (20), chaque intervalle laissé vide par l'autre demi-barrette, ladite barrette (20) étant également mobile autour du centre (O).

6. Système selon l'une des revendications 3 à 5, caractérisé par le fait que la mosaïque (40) est formée d'une adjonction régulière de m barrettes (20), distantes deux à deux du même intervalle angulaire ($\varepsilon$) afin de couvrir toute la circonférence, la rotation autour du centre (O) de ladite mosaïque (40) étant très faible et alternative et égale à $\Delta\alpha + \varepsilon$.

7. Système selon la revendication 1, caractérisé par le fait que la mosaïque (50) est formée d'une adjonction régulière de q barrettes (2) identiques, centrées chacune en (O), juxtaposées avec une distance angulaire ($\gamma$) de telle sorte que $q(\Delta\alpha + \gamma)$ égale 360 degrés.

8. Système selon l'une des revendications 5 à 7, caractérisé par le fait que l'intervalle ($\varepsilon$, $\gamma$) séparant deux éléments détecteurs ($D_i$) adjacents quelconques est choisi inférieur à la dimension de la tache (T) optique placée dans le plan focal de l'objectif (1).

9. Système selon l'une des revendications 3 à 6, caractérisé par le fait que la mosaïque (2, 20, 30, 40) est déplacée dans le plan focal de l'objectif (1) autour du foyer principal de cet objectif (1), afin de balayer 360 degrés en azimut.

10. Système selon la revendication 9, caractérisé par le fait que les moyens d'entraînement de la mosaïque (2, 20, 30) comprennent un moteur pas-à-pas.

11. Système selon l'une des revendications 3 à 6, caractérisé par le fait que la mosaïque (2, 20, 30, 40) couvre un angle en site égal à 90 degrés.

12. Système selon l'une des revendications 1 à 11, caractérisé par le fait que la (les) source(s) émettrice (s) émet(tent) dans un domaine spectral donné et l'objectif (1) est sensiblement monospectral (multispectral) à bande(s) étroite(s) et les éléments détecteurs ($D_i$) sont choisis pour être sensibles à la (les) même(s) longueur(s) d'onde(s).

13. Système selon la revendication 12, caractérisé par le fait que le domaine spectral est choisi parmi l'infrarouge, le visible, l'ultraviolet.

14. Système selon l'une des revendications 12 et 13, caractérisé par le fait que lesdites sources émettrices émettent des messages différents.

15. Système selon l'une des revendications 12 et 13, caractérisé par le fait que lesdites sources émettrices émettent le même message.

16. Système selon l'une des revendications 1 à 15, caractérisé par le fait qu'il comporte des moyens pour extraire, amplifier, multiplexer sur deux (k) voies adjacentes les signaux fournis par deux (k) éléments détecteurs ($D_i$) adjacents, des moyens pour appliquer lesdits signaux à l'entrée d'un circuit (62 à 67) de traitement, des moyens (63) pour discriminer les bruits engendrés du signal utile, des moyens pour traiter le signal et en extraire le signal modulé de chaque source émettrice.

17. Système selon l'une des revendications 3 à 6 et 8 à 16, caractérisé par le fait que ledit circuit (62 à 67) de traitement comporte des moyens pour commander le balayage en azimut de la mosaïque (2, 20, 30, 40).

18. Système selon l'une des revendications 16 et 17, caractérisé par le fait que, lorsque deux sources émettrices émettent le même signal et sont placées à une certaine distance l'une de l'autre, en réception, le circuit (63) de discrimination permet, dans le cas où le signal reçu présente même grandeur que le bruit engendré par le soleil, de décider de rechercher l'autre source exemptée de bruit, grâce au signal fourni par un autre élément détecteur ($D_j$) (resp. grâce à une modification d'azimut) si les sources émettrices sont placées l'une au-dessus de l'autre (resp. si les sources sont placées à même hauteur horizontalement).

19. Système selon l'une des revendications 16 à 18, caractérisé par le fait que la position du détecteur ($D_s$) recevant le signal recherché permet d'en déduire en sortie d'un circuit de gestion et commande (65) les coordonnées de la source recherchée.

**Patentansprüche**

1. System zur Übertragung von Nachrichten, die von mindestens einer Quelle ($E_1$) ausgesendet werden, die ein moduliertes optisches Signal aussendet, wobei das System Mittel zum Empfang dieses modulierten optischen Signals aufweist, dadurch gekennzeichnet, daß die Empfangsmittel im wesentlichen von einem im wesentlichen halbkugelförmigen Weitwinkelobjektiv (1) und, in der Brennebene dieses Objektivs (1), von einer beweglichen oder ortsfesten Photorezeptor-Einrichtung gebildet werden, die aus einem Mosaik (2, 20, 30, 40, 50, 55) von n Detektorelementen besteht, wobei n eine vorbestimmte natürliche ganze Zahl ist, und die in der Lage ist, aus allen Seitenwinkel- und Zielhöhenwinkelrichtungen zu empfangen, und für die Strahlung des optischen Emissionssignales empfindlich ist.

2. System nach Anspruch 1, dadurch gekennzeichnet, daß das Mosaik ein an sich bekanntes "Brennebenen"-Mosaik (55) ist, dessen Elemente in einer Reihen-Spalten-Anordnung vorgesehen sind, wobei dieses Mosaik (55) das Feld des Objektivs (1) abdeckt.

3. System nach Anspruch 1, dadurch gekennzeichnet, daß das Mosaik ein Stab (2) ist, der von n Detektoren gebildet wird und die Form eines Sektors ($\Delta\alpha$) eines Kreises mit dem Mittelpunkt (O) aufweist, wobei jeder Elementardetektor (Di) die Form eines Abschnitts dieses Sektors aufweist, der von zwei Segmenten begrenzt wird, die senkrecht zur Achse dieses Stabs (2) sind, wobei der Stab (2) um den Punkt (O) beweglich ist.

4. System nach Anspruch 1, dadurch gekennzeichnet, daß das Mosaik ein Stab (30) ist, der die Form eines Sektors ($\Delta\alpha$) eines Kreises mit dem Mittelpunkt (O) aufweist, wobei jeder Elementardetektorabschnitt ($D'_i$) die Form eines Abschnitts dieses Sektors aufweist, der von zwei Segmenten begrenzt wird, die untereinander parallel und nicht senkrecht zur Achse (Ox) dieses Stabs (30) sind, wobei der Stab (30) ebenfalls um den Punkt (O) beweglich ist.

5. System nach Anspruch 3, dadurch gekennzeichnet, daß der Stab (20) von zwei mit einem Winkelabstand ($\varepsilon$) nebeneinanderliegenden linearen Halbstäben ($D_{2p}$, $D_{2p+1}$) gebildet wird, die sich jeweils aus n/2 Detektorelementen zusammensetzen, wobei die n Detektorelemente vom einen zum anderen Halbstab zickzackartig versetzt angeordnet sind, wobei die geraden und ungeraden Elemente in Richtung der Achse des Stabs (20) das jeweilige von dem anderen Halbstab leergelassene Intervall mit Überlappung abdecken, wobei der Stab (20) ebenfalls um den Mittelpunkt (O) beweglich ist.

6. System nach einem der Ansprüche 3 bis 5, dadurch gekennzeichnet, daß das Mosaik (40) von einer regelmäßigen Aneinanderfügung von m Stäben (20) gebildet wird, die paarweise jeweils mit demselben Winkelabstand ($\varepsilon$) voneinander beabstandet sind, um den gesamten Umfang abzudecken, wobei die Drehung um den Mittelpunkt (O) des Mosaiks (40) sehr gering ist und in wechselnder Richtung erfolgt und $\Delta\alpha + \varepsilon$ entspricht.

7. System nach Anspruch 1, dadurch gekennzeichnet, daß das Mosaik (50) von einer regelmäßigen Aneinanderfügung von q identischen Stäben (2) gebildet wird, die jeweils in (O) zentriert sind und mit einem solchen Winkelabstand ($\gamma$) nebeneinanderliegen, daß q($\Delta\alpha + \gamma$) gleich 360 Grad ist.

8. System nach einem der Ansprüche 5 bis 7, dadurch gekennzeichnet, daß der Abstand ($\varepsilon$, $\gamma$), der zwei beliebige aneinandergrenzende Detektorelemente ($D_i$) trennt, kleiner als die Abmessung des in der Brennebene des Objektivs (1) gelegenen optischen Punkts (T) gewählt wird.

9. System nach einem der Ansprüche 3 bis 6, dadurch gekennzeichnet, daß das Mosaik (2, 20, 30, 40) in der Brennebene des Objektivs (1) um den Hauptbrennpunkt dieses Objektivs (1) verschoben wird, um 360 Grad Azimut abzutasten.

10. System nach Anspruch 9, dadurch gekennzeichnet, daß die Antriebsmittel des Mosaiks (2, 20, 30) einen Schrittmotor umfassen.

11. System nach einem der Ansprüche 3 bis 6, dadurch gekennzeichnet, daß das Mosaik (2, 20, 30, 40) einen Zielhöhenwinkel von 90 Grad abdeckt.

12. System nach einem der Ansprüche 1 bis 11, dadurch gekennzeichnet, daß die Sendequelle(n) in einem bestimmten Spektralbereich aussendet (aussenden) und das Objektiv (1) im wesentlichen monospektral (multispektral) mit (einem) schmalen Bandbereich(en) ist und die Detektorelemente ($D_i$) so gewählt sind, daß sie für dieselbe(n) Wellenlänge(n) empfindlich sind.

13. System nach Anspruch 12, dadurch gekennzeichnet, daß der Spektralbereich unter Infrarot, dem sichtbaren Bereich und Ultraviolett gewählt wird.

14. System nach einem der Ansprüche 12 und 13, dadurch gekennzeichnet, daß die Sendequellen verschiedene Nachrichten senden.

15. System nach einem der Ansprüche 12 und 13, dadurch gekennzeichnet, daß die Sendequellen dieselbe Nachricht senden.

16. System nach einem der Ansprüche 1 bis 15, dadurch gekennzeichnet, daß es aufweist: Mittel, um die von zwei (k) benachbarten Detektorelementen ($D_i$) gelieferten Signale abzufragen, zu amplifizieren und auf zwei (k) benachbarten Wegen zu multiplexen, Mittel, um die Signale an den Eingang einer Verarbeitungsschaltung (62 bis 67) zu legen, Mittel (63), um das erzeugte Rauschen vom Nutzsignal zu unterscheiden, sowie Mittel, um das Signal zu verarbeiten und daraus das modulierte Signal jeder Sendequelle zu gewinnen.

**17.** System nach einem der Ansprüche 3 bis 6 und 8 bis 16, dadurch gekennzeichnet, daß die Verarbeitungsschaltung (62 bis 67) Mittel aufweist, um die Azimutabtastung des Mosaiks (2, 20, 30, 40) zu steuern.

**18.** System nach einem der Ansprüche 16 und 17, dadurch gekennzeichnet, daß, wenn zwei Sendequellen dasselbe Signal senden und in einer bestimmten Entfernung voneinander angeordnet sind, die Unterscheidungsschaltung (63) beim Empfang in dem Fall, wo das empfangene Signal dieselbe Größe aufweist wie das von der Sonne erzeugte Rauschen, zu entscheiden gestattet, die andere, rauschfreie Quelle zu suchen, und zwar mittels des von einem anderen Detektorelement ($D_i$) gelieferten Signals (bzw. durch eine Azimutänderung), wenn die Sendequellen übereinander angeordnet sind (bzw. wenn die Quellen horizontal in gleicher Höhe angeordnet sind).

**19.** System nach einem der Ansprüche 16 bis 18, dadurch gekennzeichnet, daß sich aus der Position des Detektors ($D_s$), der das gesuchte Signal empfängt, am Ausgang einer Verwaltungs- und Steuerschaltung (65) die Koordinaten der gesuchten Quelle ableiten lassen.

## Claims

**1.** System for transmission of messages emitted by at least one source ($E_1$) emitting a modulated optical signal, the system comprising means for reception of the said modulated optical signal, characterised in that the reception means are essentially formed of a substantially semi-hemispherical wide field lens (1) and, in the focal plane of this lens (1), of a light detector device comprised of a mosaic (2, 20, 30, 40, 50, 55), of n detector elements, movable or fixed, n being a predetermined natural number, able to receive omnidirectionally in a bearing and in an elevational angle and sensitive to the radiation of the said optical emission signal.

**2.** System according to claim 1, characterised in that the mosaic is a "focal plane" mosaic (55) known per se, of which the elements are arranged according to a line-column arrangement, the said mosaic (55) covering the field of the lens (1).

**3.** System according to claim 1, characterised in that the mosaic is a bar (2) formed of n detectors, being in the form of a sector ($\Delta\alpha$) of a circle centred at (0), each elementary detector (Di) being in the form of a portion of this sector delimited by two segments perpendicular to the axis of the said bar (2), the said bar (2) being movable about the point (0).

**4.** System according to claim 1, characterised in that the mosaic is a bar (30) being in the form of a sector ($\Delta\alpha$) of a circle centred at (0), each elementary detector portion ($D'_i$) being in the form of a portion of this sector delimited by two segments which are parallel to each other and not perpendicular to the axis (0x) of this bar (30), the said bar (30) also being movable about the point (0).

**5.** System according to claim 3, characterised in that the bar (20) is the juxtaposition at an angular distance ($\varepsilon$) of two linear half bars ($D_{2p}$, $D_{2p+1}$) each composed of n/2 detector elements, the said n detector elements being disposed in quincunx from one half bar to the other, the even and odd elements covering by overlapping, in the direction of the axis of the said bar (20), each interval left empty by the other half bar, the said bar (20) also being movable about the centre (0).

**6.** System according to one of the claims 3 to 5, characterised in that the mosaic (40) is formed by a regular attachment of m bars (20), spaced in pairs by the same angular interval ($\varepsilon$) in order to cover the whole circumference, the rotation about the centre (0) of the said mosaic (40) being very slight and alternating and equal to $\Delta\alpha + \varepsilon$.

**7.** System according to claim 1, characterised in that the mosaic (50) is formed from a regular attachment of q identical bars (2), each centred at (0), juxtaposed by an angular distance ($\gamma$) so that $q(\Delta\alpha + \gamma)$ is equal to 360 degrees.

**8.** System according to one of claims 5 to 7, characterised in that the interval ($\varepsilon$, $\gamma$) separating any two adjacent detector elements ($D_i$) is selected to be less than the size of the optical spot (T) placed in the focal plane of the lens (1).

**9.** System according to one of claims 3 to 6, characterised in that the mosaic (2, 20, 30, 40) is displaced in the focal plane of the lens (1) about the main focal point of this lens (1) in order to scan 360 degrees in azimuth.

**10.** System according to claim 9, characterised in that the means for driving the mosaic (2, 20, 30) comprise a stepping motor.

**11.** System according to one of claims 3 to 6, characterised in that the mosaic (2, 20, 30, 40) covers an elevational angle equal to 90 degrees.

**12.** System according to one of claims 1 to 11, characterised in that the emitting source(s) emit(s) in a given spectral range and the lens (1) is substantially monospectral (multispectal) with (a) narrow band(s) and the detector elements ($D_i$) are selected to be sensitive to the same wavelength(s).

13. System according to claim 12, characterised in that the spectral range is chosen from among infrared, visible light and ultraviolet.

14. System according to one of claims 12 and 13, characterised in that the said emitting sources emit different messages.

15. System according to one of claims 12 and 13, characterised in that the said emitting sources emit the same message.

16. System according to one of claims 1 to 15, characterised in that it comprises means for extracting, amplifying and multiplexing, on two (k) adjacent channels, the signals supplied by two (k) adjacent detector elements ($D_i$), means for applying the said signals to the input of a processing circuit (62 to 67), means (63) for discriminating the noises caused from the useful signal, means for processing the signal and extracting therefrom the modulated signal of each emitting source.

17. System according to one of claims 3 to 6 and 8 to 16, characterised in that the said processing circuit (62 to 67) comprises means for controlling the scanning of the mosaic (2, 20, 30, 40) in azimuth.

18. System according to one of claims 16 and 17, characterised in that when two emitting sources emit the same signal and are placed at a certain distance one from the other, in reception, the discriminating circuit (63) makes it possible, in the case where the received signal is of the same size as the noise caused by the sun, to decide to seek the other source without noise, by virtue of the signal supplied by another detector (Dj) (resp. by virtue of a modification of azimuth) if the emitting sources are placed one above the other (resp. if the sources are placed at the same height horizontally).

19. System according to one of claims 16 to 18, characterised in that the position of the detector ($D_s$) receiving the desired signal makes it possible to deduce therefrom, at the output of a processing and control circuit (65), the coordinates of the desired source.

**Figure 1**

**Figure 2**

**Figure 3 a**

Portion de site

Portion ou secteur
d'azimut

Di

Plan focal

**Figure 3 b**

**Figure 4**

Axe optique vertical

Flux incident

$\varphi$

1

Image d'une source ponctuelle

M $\rho$ 0

3

**Figure 4 bis**

**Figure 5**

**Figure 6**

PARTIE TOURNANTE OU FIXE

PARTIE FIXE

Di

60

Dj

60

Hc

**MULTIPLEXAGE** — 61

Voie n° j

Voie adjacente
j-1 ou j+1

Horloge de Commande

Ampli filtre — 62

Ampli filtre — 62'

Circuit de discrimination des signaux bruités — 63

Circuit de discrimination des signaux bruités — 63'

Sélection de la voie la meilleur — 64

66

GESTION ET COMMANDE — 65

Commande du moteur pas à pas — 67

Horloge de Base — Hb

Vers le traitement de l'information

Coordonnées de l'émetteur recherché

Sv bit de validation

EP 0 432 025 B1

**Figure 7**

EP 0 432 025 B1

**Figure 8**

21

Tache T image

20

Δα

D3

D5

D1

0

D2

ε

D4

D6

Δα

**Figure 9**

Tache T image

30

Δα

0

x

D'1

D'2

δ

D'3

D'4

D'5

**Figure 10**

$$\pm\left(\frac{\Delta\alpha}{2} + \frac{\varepsilon}{2}\right)$$

$\varepsilon$

$\Delta\alpha$

40

Di

0

Figure 11

**Figure 12**

**Figure 13**